# EUROPEAN PATENT SPECIFICATION

(11) **EP 1 098 394 B1**
(45) Date of publication and mention of the grant of the patent: **27.12.2006**
(21) Application number: 00403070.6
(22) Date of filing: 06.11.2000
(51) Int. Cl.: H01R 12/04, H05K 5/02, G06K 7/06, H01R 13/629, G06K 7/00, G06K 19/077

(54) **Chip-card reader**
Chipkartenleser
Lecteur de carte à micro-circuit

(30) Priority: 08.11.1999 FR 9914002
(43) Date of publication of application: 09.05.2001
(73) Proprietor: FCI, 78000 Versailles (FR)
(72) Inventor: Pernet, Michel, 25300 Doubs (FR)
(74) Representative: de Roquemaurel, Bruno

(56) References cited:
- EP-A- 0 549 983
- EP-A- 0 810 541
- DE-A- 3 916 783
- DE-A- 19 703 007
- US-A- 5 055 970
- US-A- 5 563 400
- US-A- 5 933 328

## Description

The present invention relates to a chip card reader which comprises a housing formed by a base and a cover, wherein an insulating frame is provided, which supports electric contacts connected, on the one hand, to a "substrate" on which electronic data processing components are mounted and, on the other hand, to a socket which is fixed at one end of said housing and connected to a dialog-dedicated port and ensures interfacing with a processing and communication system.

The invention also relates to a mobile telephone having such a chip card reader.

The chip card readers designed to fit into computer systems for processing commercial transactions (ATMs, ticket machines, etc. ), in public phones or in mobile phones generally have card slides operating with the so-called landing technology. This technology, described in FR 2 628 901 consists in transporting the card above the printed circuit board accommodated inside the housing and positioning it, by letting it land on the electric contacts of a connector fixed on the printed circuit board. A drawback of this type of reader derives from the clutter formed in the housing, which complicates its fabrication. Furthermore, these readers are not autonomous, because they are generally dedicated to specific applications.

Patent application EP 0 549 983 discloses an adapter for connecting a coin-shaped IC memory to an external device, this adapter comprising a chip card-shaped housing and a slide unit for receiving the IC memory and inserting it into the housing where it is connected through a printed circuit board to an external connector having a specific shape in order to be housed in the thickness of the housing.

US 5 563 400 discloses a chip card reader according to the preamble of claim 1.

The object of the present invention is to provide a chip card reader being of simple conception and autonomous, forming little clutter and being able to be connected to several different data processing systems.

This object is achieved by a chip card reader according to claim 1.

Thanks to the invention, the size of the chip card reader is reduced and its fabrication is considerably simplified.

According to a preferred embodiment of the invention, the slide unit comprises a lower platform mounted to be movable beneath said printed circuit board and provided with means for locking/unlocking said slide unit inside the housing.

Thanks to this structure, the printed circuit board helps to guide the slide unit inside the housing. Moreover, the means for locking the slide unit allow to stabilize the slide unit in the housing with the highest accuracy.

In accordance with an advantageous embodiment of the invention, the base of the housing has at least two parallel and coplanar slide rails disposed along lateral walls of the housing, to provide, on the one hand, a support for the printed circuit board and, on the other hand, a guiding means for the lower platform into the housing.

Preferably, said lower platform consists of three parallel arms connected at their proximal ends, and arranged to slide beneath said printed circuit board, between said slide rails.

Hence, it is easy to accurately control the motion of the slide unit in the housing and, as a result, the position of the card on the printed circuit board.

Additional features and advantages of the invention will be further discussed in the following description with reference to the accompanying figures provided as non-limiting examples:
- Figure 1 is a perspective exploded bottom view of a chip card reader complying with the invention, the slide unit being partially inserted into the housing of the card reader;
- Figure 2 is a perspective exploded top view of the chip card reader as shown in Figure 1;
- Figure 3 is a perspective view of the lower part of the reader as shown in Figure 1;
- Figure 4 is a perspective view of the slide unit for the card reader as shown in Figure 1;
- Figure 5 is a perspective view of a slide unit partially inserted into the housing of the card reader as shown in Figure 1;
- Figure 6 is a schematic plane and side view of the card reader as shown in Figure 1;
- Figure 7 is a schematic plane and top view of the card reader as shown in Figure 1;
- Figure 8 is a schematic plane and side view of the card reader as shown in Figure 1, the slide unit being completely inserted into the housing of the card reader;
- Figure 9 is a schematic plane and top view of the card reader as shown in Figure 1, the slide unit being completely inserted into the housing of the card reader.

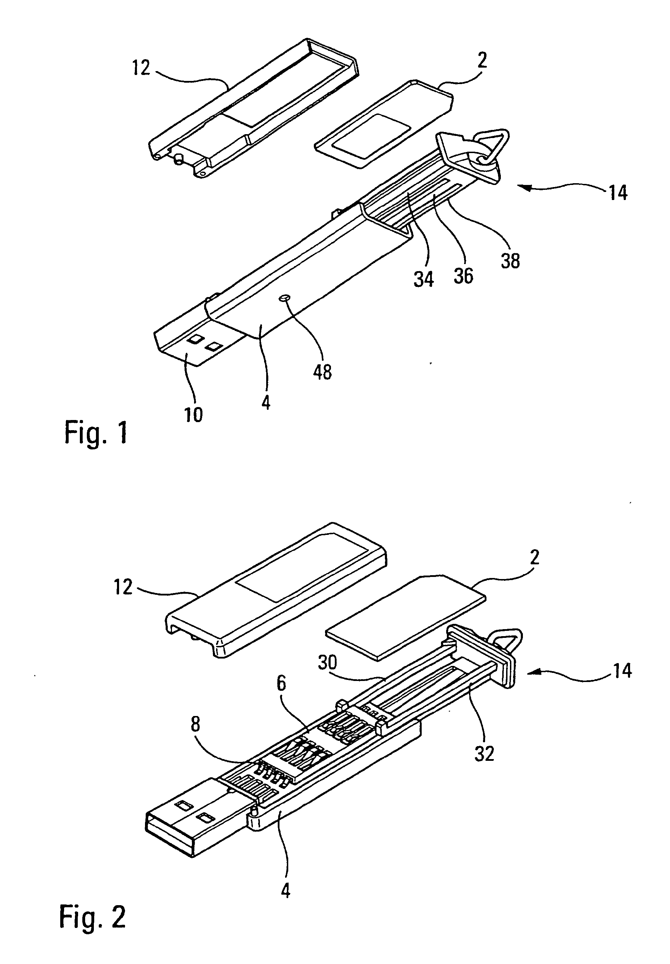

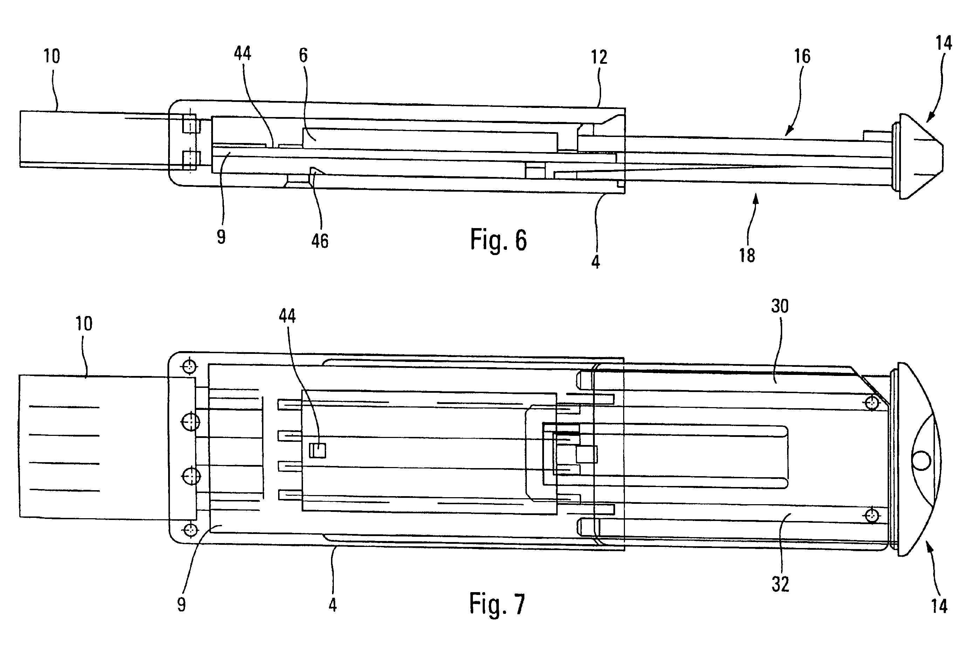

Referring to Figures 1 to 3, a chip card reader comprises a housing consisting of a base 4 wherein an insulating frame 6 is provided (Figure 2), which supports electric contacts 8 connected, on the one hand, to a printed circuit board 9 (Figure 6) on which electronic data processing components are mounted and, on the other hand, to a universal USB (Universal Serial Bus) socket 10, snapped at one end of said housing. A cover 12 having a shape and size adapted to those of the base 4 is provided to form, with said base 4, a space for surrounding the set of elements which form the card reader. The cover 12 may have in its upper face a transparent part 13 and may be snap-fitted onto the base 4. It may as well be molded with said base 4 from the same material. A linearly moving slide unit 14 is provided to transport the chip card 2 between the outside and the inside of the housing where the conductive pads thereof are connected with the electric contacts of the USB socket 10.

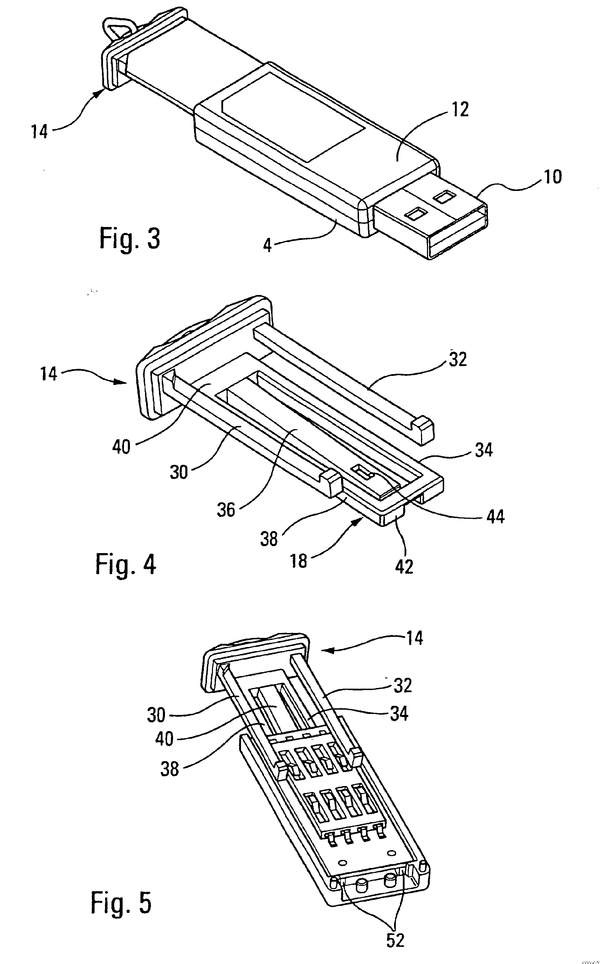

According to a preferred embodiment of the invention, shown in Figure 4, the slide unit 14 comprises an upper platform 16 (Figure 6) having a shape and size adapted to support the chip card 2, and a lower platform 18 and provided with means for locking/unlocking 44 said slide unit 14 inside the housing.

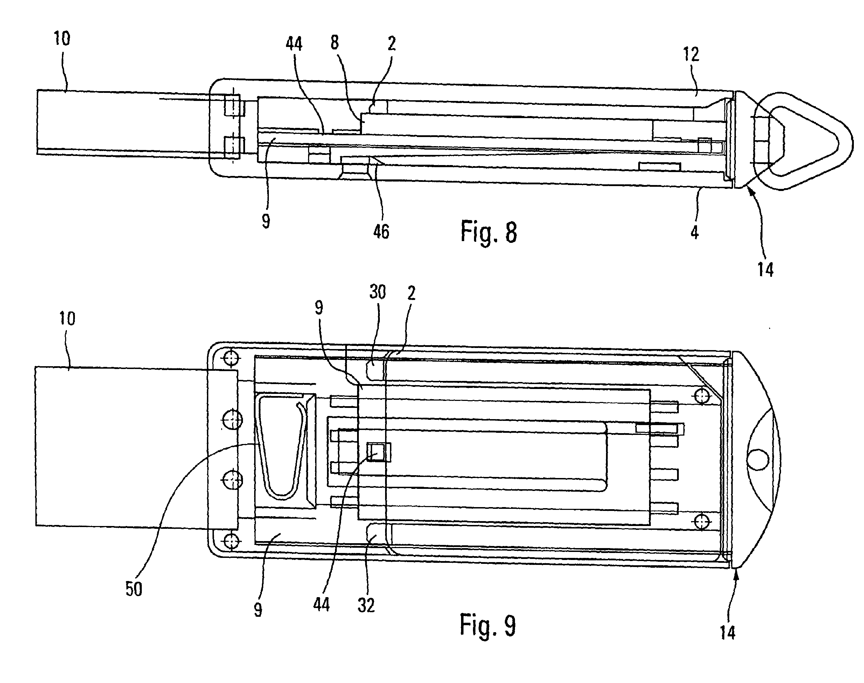

Said upper platform 16 consists of two coplanar arms 30 and 32 being arranged to slide above the printed circuit board when the slide unit 14 moves, whereas the lower platform 18 consists of three parallel arms 34, 36, 38, substantially coplanar and connected at their proximal ends 40, namely a central arm 36 having a free distal end 42 and two lateral arms 34, 38 connected at their distal ends 42. These arms 34, 36, 38 are arranged when the slide unit moves to slide beneath said printed circuit board, between lateral slide rails 52 provided in said housing. Also, the distal end 42 of the central arm 36 has locking means, for example in the form of a hole 44, designed to receive a lug 46 provided on the base 4 of the housing (Figures 6 and 8). Said base has a hole 48, as shown in Figures 1, 6 and 8, which gives access to the lower platform 18 to unlock the central arm 36 of the base 4 by exerting an inward pressure thereon.

In order to assist this unlocking operation, said central arm 36 extends preferably slightly obliquely outward the housing, between its proximal end 40 and its distal end 42. A spring 50, as shown in Figure 9, is provided at the bottom of the base 4 of the housing to push the slide unit 14 outwards when the central arm 36 is unlocked.

As may be seen in Figures 5, 7 and 9, the base 4 of the housing has two parallel and coplanar slide rails 52 which are located along the inner faces of the lateral walls of the housing to provide, on the one hand, a support for the printed circuit board and, on the other hand, a guiding means for the lower platform 18 in the housing.

In order to communicate with a data processing system, the card reader according to the invention includes a microprocessor and a memory (not shown), for management and storage of exchanged data respectively. These circuits may be directly carried by the printed circuit board 9 and positioned under the insulating frame 6 as described in patent FR 95 15 666.

The card reader according to the invention may be used as a security key to a computer, or as a user authentication means. It may as well provide control of accesses to computer system requiring codes. Finally, the reader of the invention may be fitted in a portable telephone.

## Claims

1. A chip card reader which comprises a housing, consisting of a base (4) and a cover (12), and in which an insulating frame (6) is provided, which supports electric contacts connected, on the one hand, to a printed board (9) and, on the other hand, to a socket (10), which is snapped at the end of said housing and connected to a dialog-dedicated port and ensures interfacing with a processing and communication system, comprising a linearly moving slide unit (14) which is designed to transport the chip card (2) from the outside into said housing to connect the conductive segments of said card (2) to the electric contacts of the socket (10), **characterized in that** said slide unit (14) comprises an upper platform (16), mounted to be movable above the printed board (9), and having a shape and size adapted to support the chip card (2) and said upper platform (16) consisting of two coplanar arms (30, 32) being arranged to slide above the printed board (9) when the slide unit (14) moves.

2. A chip card reader (2) as claimed in claim 1, **characterized in that** said slide unit (14) further comprises a lower platform (18), mounted to be movable beneath said printed board (9) and provided with means for locking/unlocking said slide unit (14) inside the housing.

3. A reader as claimed in claim 2, **characterized in that** the base (4) has at least two parallel slide rails (52), which are shifted longitudinally to provide, on the one hand, a support for the printed board (9) and, on the other hand, a guiding means for the lower platform (18) in the housing.

4. A reader as claimed in claim 2 or 3, **characterized in that** said lower platform (18) consists of three parallel arms (34, 36, 38), being connected at their proximal ends (40) and at their distal ends (42), and arranged to slide beneath said printed board (9), between said slide rails (52).

5. A reader as claimed in claim 4, **characterized in that** the distal end (42) of the central arm (36) has a notch designed to receive a lug (46) provided on the base (4).

6. A reader as claimed in claim 5, **characterized in that** said central arm (36) is shaped with a descending slope between its proximal end (40) and its distal end (42).

7. A reader as claimed in any claim 1 to 6, **characterized in that** it includes a microprocessor and a memory for management and storage, respectively, of data exchanged with a data processing computer system.

8. A reader as claimed in claim 1, **characterized in that** the cover (12) has a transparent upper face.

9. A reader as claimed in any claim 1 to 8, **characterized in that** it includes a spring, provided at the bottom of the base (4), which is designed to push the slide unit (14) outwards when the central arm (36) is unlocked.

10. A mobile telephone **characterized in that** it includes a reader as claimed in any claim 1 to 9.

## Patentansprüche

1. Chipkartenleser, der ein Gehäuse aufweist, das aus einer Basis (4) und einem Deckel (12) besteht und in dem ein Isolierrahmen (6) vorgesehen ist, der elektrische Kontakte trägt, die einerseits mit einer Leiterplatte (9) und andererseits mit einer Buchse (10), die auf das Ende des Gehäuses geschnappt ist und mit einem für einen Dialog spezifischen Port verbunden ist und eine Schnittstelle mit einem Verarbeitungs- und Kommunikationssystem gewährleistet, verbunden sind, mit einer sich linear bewegenden Schiebereinheit (14), die ausgebildet ist, um die Chipkarte (2) von außen in das Gehäuse zu transportieren, um die leitenden Abschnitte der Karte (2) mit den elektrischen Kontakten der Buchse (10) zu verbinden, **dadurch gekennzeichnet, dass** die Schiebereinheit (14) eine obere Plattform (16) aufweist, die so montiert ist, dass sie über der Leiterplatte (9) bewegbar ist, und die eine Form und Größe besitzt, die zum Tragen der Chipkarte (2) ausgebildet sind, wobei die obere Plattform (16) aus zwei koplanaren Armen (30, 32) besteht, die so angeordnet sind, dass sie über der Leiterplatte (9) gleiten, wenn sich die Schiebereinheit (14) bewegt.

2. Chipkartenleser (2) nach Anspruch 1, **dadurch gekennzeichnet, dass** die Schiebereinheit (14) weiter eine untere Plattform (18) aufweist, die so montiert ist, dass sie unter der Leiterplatte (9) bewegbar ist, und die mit einer Einrichtung zum Verriegeln/Entriegeln der Schiebereinheit (14) in dem Gehäuse versehen ist.

3. Leser nach Anspruch 2, **dadurch gekennzeichnet, dass** die Basis (4) wenigstens zwei parallele Schieberschienen (52) hat, die in Längsrichtung verlaufen, um einerseits eine Stütze für die Leiterplatte (9) und andererseits eine Führungseinrichtung für die untere Plattform (18) in dem Gehäuse vorzusehen.

4. Leser nach Anspruch 2 oder 3, **dadurch gekennzeichnet, dass** die untere Plattform (18) aus drei parallelen Armen (34, 36, 38) besteht, die an ihren proximalen Enden (40) und an ihren distalen Enden (42) verbunden und so angeordnet sind, dass sie zwischen den Schieberschienen (52) unter der Leiterplatte (9) gleiten.

5. Leser nach Anspruch 4, **dadurch gekennzeichnet, dass** das distale Ende (42) des mittleren Arms (36) eine Kerbe besitzt, die ausgebildet ist, um eine an der Basis (4) vorgesehene Nase (46) aufzunehmen.

6. Leser nach Anspruch 5, **dadurch gekennzeichnet, dass** der mittlere Arm (36) mit einer abfallenden Neigung zwischen seinem proximalen Ende (40) und seinem distalen Ende (42) geformt ist.

7. Leser nach einem der Ansprüche 1 bis 6, **dadurch gekennzeichnet, dass** er einen Mikroprozessor und einen Speicher zum Verwalten bzw. Speichern von mit einem Datenverarbeitungscomputersystem ausgetauschten Daten enthält.

8. Leser nach Anspruch 1, **dadurch gekennzeichnet, dass** der Deckel (12) eine transparente Oberseite hat.

9. Leser nach einem der Ansprüche 1 bis 8, **dadurch gekennzeichnet, dass** er eine an der Unterseite der Basis (4) vorgesehene Feder enthält, die ausgebildet ist, um die Schiebereinheit (14) nach außen zu drücken, wenn der mittlere Arm (36) gelöst ist.

10. Mobiltelefon, **dadurch gekennzeichnet, dass** es einen Leser nach einem der Ansprüche 1 bis 9 enthält.

## Revendications

1. Lecteur de carte à microcircuit comportant un boîtier constitué d'une base (4) et d'un capot (12) et dans lequel est agencé un cadre isolant (6) supportant des contacts électriques reliés, d'une part, à un circuit imprimé (9) sur lequel sont montés des composants électroniques de traitement de données, et d'autre part, à une prise (10) encliquetée en bout dudit boîtier et connectée à un port dédié au dialogue et assurant l'interface avec un système de traitement et de communication, comprenant un tiroir coulissant (14) à déplacement rectiligne destiné à transporter la carte à microcircuit (2) de l'extérieur vers l'intérieur dudit boîtier pour relier les plages conductrices de ladite carte (2) aux contacts électriques de la prise (10), **caractérisé en ce que** ledit tiroir coulissant (14) comporte une plateforme supérieure (16) montée mobile au dessus du circuit imprimé (9), ladite plateforme supérieure (16) est constituée par deux bras coplanaires (30, 32) agencés de manière à glisser au-dessus du circuit imprimé (9) lors du déplacement du tiroir coulissant (14).

2. Lecteur de carte à microcircuit selon al revendication 1, **caractérisé en ce que** le tiroir coulissant (14) comprend en outre une plate-forme inférieure (18), montée mobile en dessous dudit circuit imprimé (9) et munie de moyens de verrouillage/déverrouillage dudit tiroir coulissant (14) dans le boîtier.

3. Lecteur selon la revendication 2, **caractérisé en ce que** la base (4) comporte au moins deux glissières parallèles (52) décalées longitudinalement l'une par rapport à l'autre de manière à servir, d'une part, de support au circuit imprimé (9), et d'autre part, de moyen de guidage de la plate-forme inférieure (18) dans le boîtier.

4. Lecteur selon les revendications 2 ou 3, **caractérisé en ce que** ladite plate-forme inférieure (18) est constituée par trois bras parallèles (34, 36, 38) reliés à leurs extrémités proximales (40) et à leurs extrémités distales (42) et agencés de manière à glisser en dessous dudit circuit imprimé (9), entre lesdites glissières (52).

5. Lecteur selon la revendication 4, **caractérisé en ce que** l'extrémité distale (42) du bras central (36) comporte une encoche destinée à recevoir un ergot (46) agencé sur la base (4).

6. Lecteur selon la revendication 5, **caractérisé en ce que** ledit bras central (36) présente une pente décroissante entre son extrémité proximale (40) et son extrémité distale (42).

7. Lecteur selon l'une des revendications 1 à 6, **caractérisé en ce qu'**il comporte un microprocesseur et une mémoire assurant respectivement la gestion et le stockage de données échangées avec un système informatique de traitement de données.

8. Lecteur selon la revendication 1, **caractérisé en ce que** le capot (12) comporte une face supérieure transparente.

9. Lecteur selon l'une des revendications 1 à 8, **caractérisé en ce qu'**il comporte un ressort agencé au fond de la base (4) destiné à pousser le tiroir coulissant (14) à l'extérieur du boîtier lorsque le bras central (36) est déverrouillé.

10. Téléphone mobile **caractérisé en ce qu'**il comporte un lecteur selon l'une des revendications 1 à 9.
